# EUROPÄISCHE PATENTANMELDUNG

(11) **EP 1 944 219 A1**
(43) Veröffentlichungstag der Anmeldung: **16.07.2008**
(21) Anmeldenummer: 07123374.6
(22) Anmeldetag: 17.12.2007
(51) Int. Cl.: B62D 5/04, B62D 6/00

(54) **Verfahren zum Betreiben einer Hilfskraftlenkung**

(30) Priorität: 11.01.2007 DE 102007001638
(71) Anmelder: ZF-Lenksysteme GmbH, 73527 Schwäbisch Gmünd (DE)
(72) Erfinder: Heilig, Arnulf, 73529, Schwäbisch Gmünd (DE); Müller, Claus-Dieter, 73550, Waldstetten (DE)

(57) **Zusammenfassung**

Es werden ein Verfahren zum Betreiben einer Hilfskraftlenkung (2) sowie eine solche Hilfskraftlenkung (2) vorgestellt. Bei dem Verfahren wird über eine Lenkhandhabe (11) ein eingeleitetes manuelles Handmoment (M_{H}') und ein Zusatzhandmoment (M_{K}) über ein Lenkgetriebe zum Auslenken von lenkbaren Rädern (15) des Kraftfahrzeugs auf die Räder (15) als Lenkmoment übertragen. Dabei ist vorgesehen, dass das eingeleitete Handmoment (M_{H}') gemessen wird und in Abhängigkeit einer erfassten Querbeschleunigung und des gemessenen Handmoments (M_{H}') das Zusatzhandmoment (M_{K}) beeinflusst wird.

## Beschreibung

Es werden ein Verfahren zum Betreiben einer Hilfskraftlenkung, ein Computerprogramm und ein Computerprogrammprodukt zur Ausführung des Verfahrens sowie eine solche Hilfskraftlenkung vorgestellt.

Es ist bei Kraftfahrzeugen bekannt, den Fahrer, der über eine Lenkhandhabe den Drehwinkel vorgibt, beim Lenken mit einem Servo- bzw. Elektromotor zu unterstützen.

Aus der Druckschrift DE 102 44 067 A1 sind bspw. eine Vorrichtung und ein Verfahren zur Lenkunterstützung für Fahrzeuge mit elektromechanischer Lenkung bekannt. Bei diesen sind Fahrzeugräder sowohl mit einem durch den Fahrer beeinflussbaren Lenkmittel als auch mit einem elektrischen Servomotor antreibend verbunden. Dabei wird ein von dem Servomotor aufgebrachter Unterstützungswinkel fahrsituationsabhängig gesteuert und/oder geregelt und durch einen variablen Software-Endanschlag reduziert.

Die Druckschrift DE 100 13 711 A1 beschreibt ein servounterstütztes Lenksystem eines Kraftfahrzeugs. Bei diesem ist ein Servoantrieb vorgesehen, der als eine variable Momentunterstützung ausgebildet ist, wobei der Grad der Momentunterstützung von der Geschwindigkeit des Kraftfahrzeugs und von mindestens einer einen Korrekturwinkel charakterisierenden Größe der Fahrdydnamikmittel, wie bspw. der Beschleunigung, abhängig ist.

Es sind weiterhin aus der Druckschrift DE 696 32 387 T2 ein Verfahren und eine Vorrichtung zum Ausgleich von Drehmoment-Lenkeffekten bekannt, wobei der Ausgleich auf Grundlage der Motorumdrehung bestimmt wird.

Bei servounterstützten Lenkungen ist es wichtig, dem Fahrer über das aufzubringende Lenkmoment bzw. das anliegende oder eingeleitete Handmoment Informationen zu der aktuellen Fahrsituation zu übermitteln. So ist es bekannt, die Rückmeldung der Querbeschleunigung an den Fahrer über eine Kennlinie für die EPS-Unterstützung zu realisieren. Bei dieser Realisierung ergibt sich ein größeres Handmoment, wenn die Spurstangenkräfte größer werden. Da jedoch die Spurstangenkräfte außer von der Querbeschleunigung auch von Beladung, Straßenzustand, Achsgeometrie usw. abhängen, ist bei diesem Ansatz eine Rückmeldung der Querbeschleunigung über das Handmoment nur bedingt möglich.

Es wird somit angestrebt, eine Abbildung der Querbeschleunigung auf das Handmoment zu realisieren, wobei der Zusammenhang zwischen Handmoment und Querbeschleunigung einfach applizierbar sein sollte und das Lenkgefühl bei kleinen Querbeschleunigungen nicht beeinträchtigt ist. Wichtig ist weiterhin, dass alle Sicherheitsaspekte erfüllt sind, so darf bspw. ein fehlerhaftes Querbeschleunigungssignal keinen kritischen Fahrzustand zur Folge haben.

Das erfindungsgemäße Verfahren dient zum Betreiben einer Hilfskraftlenkung, bei dem ein über eine Lenkhandhabe eingeleitetes manuelles Handmoment und ein Zusatzhandmoment über ein Lenkgetriebe zum Auslenken von lenkbaren Rädern des Kraftfahrzeugs auf die Räder als Lenkmoment übertragen werden. Dabei ist vorgesehen, dass das eingeleitete Handmoment gemessen wird und in Abhängigkeit einer erfassten Querbeschleunigung und des gemessenen Handmoments das Zusatzhandmoment beeinflusst wird.

In Ausgestaltung ist vorgesehen, dass das Zusatzhandmoment, welches typischerweise über einen Elektro- bzw. Servomotor aufgebracht wird, so gewählt wird, dass das eingeleitete Handmoment sich erhöhen muss, um das Lenkmoment konstant zu halten. Somit wird in Abhängigkeit der gemessenen Querbeschleunigung und des aktuellen Handmoments zu dem gemessenen Handmoment das Zusatzhandmoment hinzuaddiert, wodurch das Handmoment sich abhängig von der Querbeschleunigung erhöht.

Liegt der Betrag des aktuellen Handmoments über dem der Querbeschleunigung zugeordneten Wert, so wird dies nicht eingeregelt bzw. das Zusatzhandmoment ist gleich null.

Bei dem Verfahren wird regelmäßig eine Kennlinie verwendet, die den Zusammenhang von Handmoment und Querbeschleunigung vorgibt. Dieses Zusatzhandmoment wird in Ausgestaltung über ein PT1-Glied mit Begrenzung eingeregelt, wobei die Begrenzung des Zusatzhandmoments abhängig von der Fahrzeuggeschwindigkeit appliziert werden kann. Weiterhin kann die Filterzeitkonstante für den P-Regler des Zusatzhandmoments ebenso wie der P-Anteil des Reglers appliziert werden.

Aus Sicherheitsgründen kann eine Plausibilisierung des gemessenen Querbeschleunigungssignals durchgeführt werden.

Die Erfindung betrifft weiterhin ein Computerprogramm mit Programmcodemitteln, um ein Verfahren zum Betreiben einer Hilfskraftlenkung der vorstehend beschriebenen Art durchzuführen, wenn das Computerprogramm auf einem Mikroprozessor eines Computers, insbesondere in einem Steuergerät der Hilfskraftlenkung, ausgeführt wird.

Das Computerprogramm kann auf einem computerlesbaren Datenträger, wie bspw. Diskette, CD, DVD, Festplatte, USB-Memory-Stick oder ähnliches, oder einem Internetserver als Computerprogrammprodukt gespeichert sein und von dort aus in das Speicherelement des Steuergeräts übertragen werden.

Die Erfindung betrifft weiterhin eine Hilfskraftlenkung eines Kraftfahrzeugs, die eine Lenkhandhabe, einen Servoantrieb mit einem Elektromotor und ein elektronisches Steuergerät zur Ansteuerung des Elektromotors aufweist. Dabei dient die Lenkhandhabe zur Vorgabe eines Lenkradwinkels als Maß für einen gewünschten Lenkwinkel für wenigstens ein lenkbares Rad des Kraftfahrzeugs. Der Servoantrieb mit einem Elektromotor dient zur Realisierung der Lenkunterstützung. Die Hilfskraftlenkung zeichnet sich dadurch aus, dass das elektronische Steuergerät zur Durchführung eines vorstehend beschriebenen Verfahrens nach einem der Ansprüche 1 bis 5 ausgebildet ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt eine bevorzugte Ausführungsform der erfindungsgemäßen Hilfskraftlenkung.
- Figur 2: zeigt in einem Blockschaltbild eine mögliche Implementierung einer Ausführungsform des erfindungsgemäßen Verfahrens.

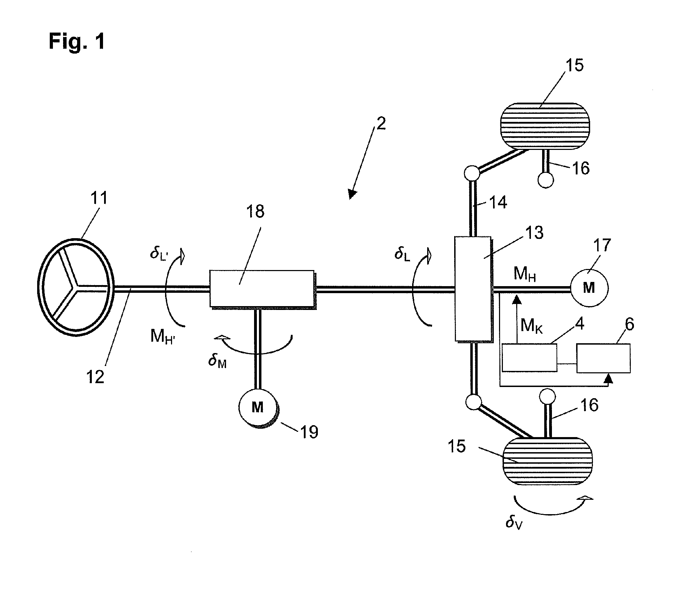

Das in Figur 1 dargestellte Lenksystem bzw. die dargestellte Hilfskraftlenkung 2 in einem Kraftfahrzeug weist einen Servoantrieb 4 mit einem nicht dargestellten Elektromotor, ein elektronisches Steuergerät 6 und eine als Lenkrad 11 ausgeführte Lenkhandhabe, die über eine Lenkwelle 12 und ein zwischengeschaltetes Übersetzungsgetriebe 13 mit einem Lenkgestänge 14 verbunden sind, auf. Bei Betätigung des Lenkrads 11 mit einem Lenkwinkel **δ**_{L}' wird das Lenkgestänge 14 in Bewegung gesetzt, woraufhin sich bei den lenkbaren Vorderrädern 15, die an Radaufhängungen 16 karosserieseitig aufgehängt sind, ein Radwinkel **δ**ᵥ einstellt. Dem Übersetzungsgetriebe 13 ist ein Stellmotor 17 zugeordnet, über den ein unterstützendes Motorstellmoment in das Lenksystem 2 eingebracht werden kann. Die Höhe des Motorstellmoments M_{Servo} wird in einem Regel-bzw. Steuergerät ermittelt, das den Stellmotor 17 mit entsprechenden Signalen beaufschlagt. Der vom Fahrer vorgegebene Lenkwinkel **δ**_{L}' wird mit einer Lenkwinkelsensorik gemessen, wobei der Wert des Lenkwinkels **δ**_{L}' dem Regel- bzw. Steuergerät als Eingangsgröße zuführbar ist.

In dem Lenksystem 2 ist ein Überlagerungsgetriebe 18 zur Erzeugung eines Überlagerungswinkels **δ**_{M} vorgesehen. Das Überlagerungsgetriebe 18 befindet sich in der Lenkwelle 12 und wird von einem Stellmotor 19 beaufschlagt. Sofern in dem Überlagerungsgetriebe 18 ein Überlagerungswinkel **δ**_{M} vorgegeben wird, addiert sich der resultierende Lenkwinkel **δ**_{L} aus dem vom Fahrer vorgegebenen Handlenkwinkel **δ**_{L}' und dem Überlagerungslenkwinkel δ_{M}.

Die beiden Stellmotoren 17 und 19 sind zweckmäßig als Elektromotoren ausgeführt, wobei grundsätzlich auch eine Ausführung als hydraulisches Stellglied in Betracht kommt.

Bei Durchführung des Verfahrens wird die Querbeschleunigung bestimmt sowie das eingeleitete Handmoment M_{H}', bspw. mit einem Momentsensor, gemessen. Einer Kennlinie ist für die bestimmte Querbeschleunigung ein geeignetes Handmoment zu entnehmen. Dieses wird mit dem eingeleiteten Handmoment M_{H}' verglichen. Ergibt der Vergleich, dass das eingeleitete Handmoment M_{H}' zu klein für die bestimmte Querbeschleunigung ist, wird diesem Handmoment M_{H}' ein negatives Zusatzhandmoment bzw. Motormoment M_{K} hinzugefügt, so dass zur Beibehaltung des gleichen Lenkmoments und damit des gleichen Lenkwinkels ein höheres Handmoment M_{H}' eingeleitet werden muss. Die Regelung bewirkt somit ein Erhöhen von M_{H}' bis dieses dem geeigneten Handmoment entspricht und damit der Fahrer über M_{H}' eine korrekte Rückmeldung über die aktuelle Fahrsituation erhält.

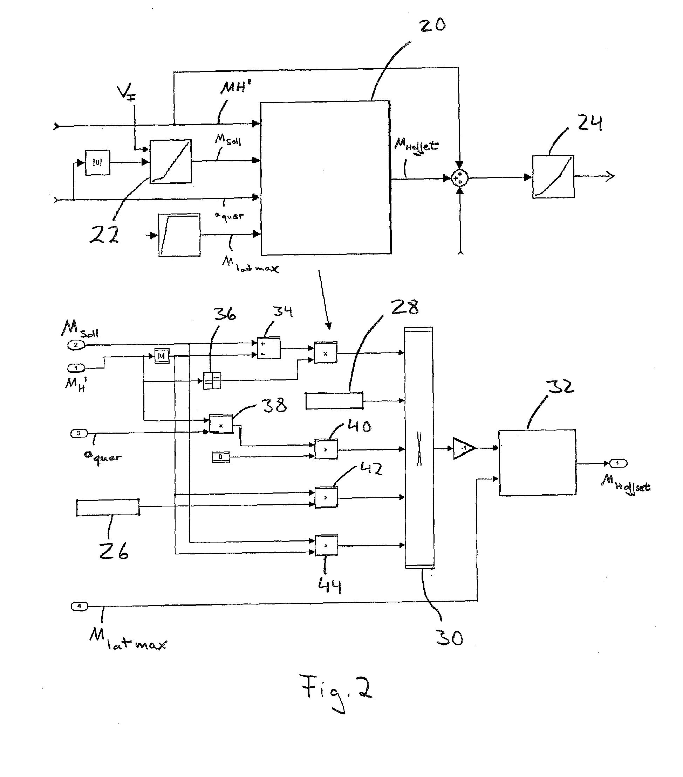

Diese Regelung ist anhand eines Blockschaltbilds in Figur 2 verdeutlicht, wobei dieses nur eine mögliche Implementierung des erfindungsgemäßen Verfahrens darstellt.

Eine Querbeschleunigungsregelung 20 hat als Eingangsgrößen ein Handmoment M_{H}' , einen Sollwert M_{Soll} für das Handmoment, eine Querbeschleunigung a_{quer} und einen Wert Mₗₐₜₘₐₓ [Nm], der eine fahrzeuggeschwindigkeitsabhängige Begrenzung der Querbeschleunigungsregelung gewährleistet.

Zur Bestimmung von M_{Soll} wird die Fahrzeuggeschwindigkeit V_{F} und die Querbeschleunigung a_{quer} in eine vorgegebene Kennlinie 22 eingegeben.

Es ergibt sich somit ein Offset für das Handmoment M_{Hoffset}, was zusammen mit dem bestimmten Handmoment M_{H}' in eine Unterstützungskennlinie 24 zur Bestimmung des erforderlichen Motormoments M_{K} eingegeben wird.

Im unteren Bereich der Figur 2 ist die Querbeschleunigungsregelung 20 detaillierter dargestellt. Als zusätzliche Größen wird bei 26 das Handmoment eingegeben, ab welchem geregelt wird. Bei 28 wird eine Regelverstärkung vorgegeben. In Block 30 wird die Regeldifferenz bewertet.

Es ist weiterhin ein Filter 32 für die Begrenzung auf Mₗₐₜₘₐₓ vorgesehen, das unter Berücksichtigung dieses Werts M_{Hoffset} ausgibt. In Block 34 erfolgt ein Vergleich zwischen Sollwert und Istwert des Handmoments und somit zwischen M_{H}' und M_{Soll}. In Block 36 wird das Vorzeichen für das Handmoment vorgegeben. In Block 38 wird das Produkt aus Querbeschleunigung a_{quer} und M_{H}' bestimmt. In Block 40 wird ein Produkt aus den beiden Werten in gleicher Richtung bestimmt. In Block 42 wir ein minimales Handmoment vorgegeben und in Block 44 wird bestimmt, ob M_{Soll} größer als M_{H}' ist.

## Patentansprüche

1. Verfahren zum Betreiben einer Hilfskraftlenkung (2), bei dem ein über eine Lenkhandhabe (11) eingeleitetes manuelles Handmoment (M_{H}') und ein Zusatzhandmoment (M_{K}) über ein Lenkgetriebe zum Auslenken von lenkbaren Rädern (15) des Kraftfahrzeugs auf die Räder (15) als Lenkmoment übertragen werden,
**dadurch gekennzeichnet, dass**
das eingeleitete Handmoment (M_{H}') gemessen wird und in Abhängigkeit einer erfassten Querbeschleunigung (a_{quer}) und des gemessenen Handmoments (M_{H}') das Zusatzhandmoment (M_{K}) beeinflusst wird.

2. Verfahren nach Anspruch 1, bei dem das Zusatzhandmoment (M_{K}) so gewählt wird, dass das eingeleitete Handmoment (M_{H}') sich erhöhen muss, um das Lenkmoment konstant zu halten.

3. Verfahren nach Anspruch 1, bei dem das Zusatzhandmoment (M_{K}) gleich null ist.

4. Verfahren nach Anspruch 1, bei dem eine Begrenzung des Zusatzhandmoments (M_{K}) in Abhängigkeit einer Geschwindigkeit (v_{F}) des Kraftfahrzeugs appliziert wird.

5. Verfahren nach einem der Ansprüche 1 bis 4, bei dem das Zusatzhandmoment (M_{K}) über ein PT1-Glied eingeregelt wird.

6. Computerprogramm mit Programmcodemitteln, um ein Verfahren zum Betreiben einer Hilfskraftlenkung (2) bei einem Kraftfahrzeug gemäß einem der Ansprüche 1 bis 5 durchzuführen, wenn das Computerprogramm auf einem Mikroprozessor eines Computers, insbesondere in einem Steuergerät (6) der Hilfskraftlenkung (2), ausgeführt wird.

7. Computerprogrammprodukt mit Programmcodemitteln, die auf einem computerlesbaren Datenträger gespeichert sind, um ein Verfahren zum Betreiben einer Hilfskraftlenkung (2) bei einem Kraftfahrzeug gemäß einem der Ansprüche 1 bis 5 durchzuführen, wenn das Computerprogramm auf einem Mikroprozessor eines Computers, insbesondere in einem Steuergerät (6) der Hilfskraftlenkung (2), ausgeführt wird.

8. Hilfskraftlenkung eines Kraftfahrzeugs, die aufweist:
eine Lenkhandhabe (11),
einen Servoantrieb (4) mit einem Elektromotor,
ein elektronisches Steuergerät (6) zur Ansteuerung des Elektromotors,
**dadurch gekennzeichnet, dass** das elektronische Steuergerät (6) zur Durchführung eines Verfahrens nach einem der Ansprüche 1 bis 5 ausgebildet ist.
